(19) Europäisches Patentamt
European Patent Office
Office européen des brevets

(11) **EP 3 038 881 B1**

(12) **EUROPÄISCHE PATENTSCHRIFT**

(45) Veröffentlichungstag und Bekanntmachung des Hinweises auf die Patenterteilung:
**28.06.2017 Patentblatt 2017/26**

(21) Anmeldenummer: **14755625.2**

(22) Anmeldetag: **14.08.2014**

(51) Int Cl.:
*B62D 15/02* (2006.01)     *B25J 9/16* (2006.01)
*G05B 19/4061* (2006.01)     *G05D 1/02* (2006.01)
*G08G 1/16* (2006.01)

(86) Internationale Anmeldenummer:
**PCT/EP2014/067406**

(87) Internationale Veröffentlichungsnummer:
**WO 2015/028316 (05.03.2015 Gazette 2015/09)**

(54) **VERFAHREN ZUR STEUERUNG EINES FAHRZEUGES**

METHOD FOR CONTROLLING A VEHICLE

METHODE POUR CONTROLER UN VEHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2013 AT 6702013**

(43) Veröffentlichungstag der Anmeldung:
**06.07.2016 Patentblatt 2016/27**

(73) Patentinhaber: **Robert Bosch GmbH**
**70442 Stuttgart (DE)**

(72) Erfinder:
• **BÖCK, Martin**
**A-2620 Neunkirchen (AT)**
• **KUGI, Andreas**
**A-1200 Wien (AT)**
• **ZIPS, Patrik**
**A-1020 Wien (AT)**

(56) Entgegenhaltungen:
**EP-A2- 0 375 055      US-A- 5 870 303**
**US-A1- 2012 101 654**

EP 3 038 881 B1

**Beschreibung**

Die Erfindung betrifft ein Verfahren zur Steuerung eines Fahrzeuges um Hindernisse, ausgehend von einer Startposition in eine Endposition, wobei das Fahrzeug entlang eines Pfades gesteuert wird.

Aus dem Stand der Technik sind Verfahren bekannt, um die Einparkkurve und die Ausparkkurve eines Fahrzeugs aus einer Parklücke oder einer Garage zu berechnen. Derartige Einparkkurven werden in automatischen Einparksystemen von Fahrzeugen angewandt, um dem Fahrer Hilfestellungen beim Ein- und Ausparken zu geben oder vollautomatisch einen Einpark- oder Ausparkvorgang durchzuführen.

So zeigt die Druckschrift DE 10 2012 211 721 A1 ein Verfahren zum Ableiten einer Parkkurve, bei der das Fahrzeug entlang linearer Abschnitte und eines einzigen Kurvenabschnittes mit konstantem Drehradius geleitet wird, um in die Parklücke zu fahren. Diese Druckschrift zeigt auch ein verbessertes Verfahren, bei dem das Fahrzeug entlang einer ersten Verlängerungsgerade, einer zweiten Verlängerungsgerade und einer dritten Verlängerungsgerade geleitet wird. Das Dokument US 2012/101654 A1 ist als nächstliegender Stand der Technik nach dem Oberbegriff des Anspruchs 1 zu sehen. Bei derartigen Verfahren ist es jedoch problematisch, dass schon vor Beginn der Bahnplanung festgelegt werden muss, wie viele lineare oder kurvenförmige Abschnitte verwendet werden sollen.

In anderen bekannten Verfahren wird eine mathematische Optimierung des gesamten Pfades durchgeführt, wobei der Pfad durch eine Zusammensetzung aus linearen Segmenten und Kurvensegmenten parametrisiert wird.

Derartige Verfahren sind jedoch im Vergleich zum manuellen Ein- oder Ausparken nur in begrenzten Fällen anwendbar und versagen in der Praxis häufig. Auch stellt die in Fahrzeugen in der Regel nur begrenzt vorhandene Rechenkapazität enge Schranken in Bezug auf die globale Optimierung des gesamten Pfades.

Die Aufgabe der vorliegenden Erfindung besteht demnach darin, ein Verfahren zur Bestimmung eines Pfads zum Einparken oder Ausparken eines Fahrzeugs zu schaffen, das einfach, unter Berücksichtigung der geringen Rechenkapazität in Fahrzeugen schnell und dennoch vielseitig genug ist, um in der Praxis sicher anwendbar zu sein.

Diese Aufgabe wird erfindungsgemäß dadurch gelöst, dass der gesamte Pfad in lineare Teilpfade unterteilt wird, die jeweils definiert sind durch eine Schrittweite $\eta$ und einen Lenkwinkel $\delta$, wobei das Verfahren folgende Schritte umfasst:

Zunächst wird ein maximaler Lenkwinkelbereich sowie ein maximaler und minimaler Schrittweitenbereich bestimmt.

Danach wird die aktuelle Distanz $e_P$ zur Endposition und der aktuelle Fahrzeug-Zielwinkel $\theta_O$ sowie die Winkeldifferenz $e_\theta = \theta - \theta_O$ des aktuellen Fahrzeugwinkels $\theta$ zum Zielwinkel $\theta_O$ festgestellt.

Dabei ist vorgesehen, dass der Zielwinkel $\theta_O$ in unterschiedlichen Abschnitten des Pfades unterschiedliche Werte annehmen kann.

Anhand dieser Informationen wird ein Optimierungsverfahren zur Ermittlung eines Teilpfads durch Minimierung des Werts einer dem Teilpfad zugeordneten Kostenfunktion $l_O$ durchgeführt, wobei die Kostenfunktion die aktuelle Distanz $e_P$ zur Endposition und die aktuelle Winkeldifferenz $e_\theta$ als voneinander unabhängig gewichtete Komponenten umfasst. Die Kostenfunktion $l_O$ kann auch weitere Komponenten umfassen, insbesondere in Abhängigkeit vom maximalen Lenkwinkelbereich und Schrittweitenbereich. Die Gewichtung der einzelnen Terme in der Kostenfunktion kann dem jeweiligen Szenario angepasst sein.

Ergebnis der Optimierung ist ein Teilpfad, definiert durch eine Schrittweite und einen Lenkwinkel. Als Randbedingungen sind der maximale Lenkwinkelbereich, der minimale und maximale Schrittweitenbereich sowie eine Kollisionsprüfung mit den Hindernissen vorgesehen.

Nach der Optimierung wird an Hand des ermittelten Teilpfades die neue Position, die Distanz zur Endposition sowie gegebenenfalls ein neuer Zielwinkel sowie die neue Winkeldifferenz bestimmt. Die Optimierung und Anpassung an die neuen Werte wird so lange wiederholt, bis die Endposition mit hinreichender Genauigkeit erreicht wird.

Die Optimierung erfolgt also nicht global für den gesamten Pfad vom Startpunkt zum Endpunkt, sondern separat für jeden einzelnen Teilpfad. Nach Durchlaufen eines Teilpfads wird eine neue Optimierungsaufgabe aufgestellt. Ausgehend vom Startpunkt ist jeder Teilpfad durch eine Schrittweite und einen Lenkwinkel definiert, wobei ein Lenkwinkelbereich vordefiniert ist, beispielsweise +/- 45°. Darüber hinaus wird eine maximale und minimale Schrittweite vorgegeben, beispielsweise ein Bereich von 1 mm bis 20cm.

In jedem einzelnen Optimierungsverfahren wird zur Ermittlung der Schrittweite und des Lenkwinkels das Minimum einer Kostenfunktion ermittelt, deren Komponenten einerseits die aktuelle Distanz zum Endpunkt, und andererseits die Winkeldifferenz des aktuellen Fahrzeugwinkels zu einem, dem jeweiligen Szenario angepassten Zielwinkel sind. Diese beiden Komponenten sind unabhängig voneinander gewichtet.

Als Randbedingung der Optimierung dienen die Schrittweiten- und Lenkwinkelbereiche, sowie eine Kollisionserkennung an Hand der Koordinaten der Fahrzeugaußenkanten und der Hindernisse. Nach erfolgter Optimierung des Teilpfads wird die neue Distanz und Winkel zum Endpunkt sowie die Differenz zum Fahrzeugwinkel bestimmt, und mit der Optimierung für den nächsten Teilpfad fortgesetzt, bis der Endpunkt mit hinreichender Genauigkeit erreicht wird.

Dieses Verfahren benötigt im Vergleich zu globalen Optimierungen des gesamten Pfades wesentlich weniger Rechenleistung, da die Optimierung auf mehrere, typischerweise 30 bis 100 Einzeloptimierungen aufgeteilt wird. Es werden keine Kurvenabschnitte benötigt, sondern der gesamte Pfad setzt sich aus linearen Teilpfaden zusammen.

Erfindungsgemäß kann vorgesehen sein, dass zunächst - bei stehendem Fahrzeug - der vollständige Pfad zum Endpunkt berechnet wird, und erst danach das Fahrzeug entlang des Pfades gesteuert wird.

Es kann jedoch ebenfalls vorgesehen sein, dass das Fahrzeug bereits während der Berechnung des Pfades zum Endpunkt entlang der berechneten Teilpfade gesteuert wird.

Weiters kann vorgesehen sein, dass abhängig von der Position eines Punktes des Fahrzeugs, insbesondere eines Eckpunktes, relativ zu den Hindernissen das Verfahren in zumindest zwei Abschnitte unterteilt wird, wobei in einem ersten Abschnitt ein Zielwinkel $\theta_O = \alpha$ gewählt wird, wobei $\alpha$ den Winkel bezeichnet, der im Wesentlichen normal auf eine Grenzlinie zwischen den Hindernissen ist.

Als Eckpunkt kann vorzugsweise jene Außenkante oder Außenecke des Fahrzeugs gewählt werden, um die sich das Fahrzeug bei der Bewegung von der Startposition zur Endposition drehen muss, um die Hindernisse zu umfahren. Es können jedoch auch andere Punkte am Fahrzeug gewählt werden.

Durch entsprechende Wahl des Zielwinkels $\theta_O$ der im Wesentlichen normal auf eine Grenzlinie zwischen den Hindernissen ist, wird erreicht, dass das Optimierungsverfahren Lösungen liefert, die eine Drehung des Fahrzugs bevorzugen und somit das Fahrzeug möglichst schnell um ein Hindernis herumführen, beispielsweise aus einer Parklücke herausbewegen.

Andererseits kann auch vorgesehen sein, dass ein Zielwinkel gewählt wird, der im Wesentlichen parallel zur Längserstreckung der Hindernisse ist. Diese Wahl ist vorteilhaft, um das Fahrzeug möglichst nicht zu drehen, sondern möglichst schnell entlang einer Geraden zu bewegen, beispielsweise nach Verlassen der Parklücke ohne übermäßige Winkelkorrekturen die Endposition aufzusuchen.

Die Wahl des Zielwinkels wird vorzugsweise dem jeweiligen Szenario angepasst.

Beispielsweise kann ein Zielwinkel normal auf eine Grenzlinie zwischen den Hindernissen vorteilhaft sein, wenn das Fahrzeug aus einer Längsparksituation (Parallelparken) oder einer Querparksituation (Garagenparken) herausbewegt werden soll.

Andererseits kann ein Zielwinkel, der im Wesentlichen parallel zur Längserstreckung der Hindernisse ist, vorteilhaft sein, wenn das Fahrzeug aus einer Schrägparksituation herausbewegt werden soll.

Erfindungsgemäß kann weiters vorgesehen sein, dass abhängig von der Position eines Eckpunktes des Fahrzeugs relativ zu den Hindernissen das Verfahren in zumindest zwei Abschnitte unterteilt wird, wobei in einem zweiten Abschnitt ein Zielwinkel $\theta_O = \theta_S$ gewählt wird, der im Wesentlichen parallel zu einer Grenzlinie zwischen den Hindernissen gewählt wird.

Dadurch kann der Fall gelöst werden, dass das Fahrzeug in einem ersten Abschnitt zunächst durch starke Drehbewegung aus einer Parklücke herausbewegt wird, und danach in einem zweiten Abschnitt möglichst ohne Drehbewegung die Endposition aufsucht.

Die Unterscheidung zwischen den jeweiligen Abschnitten erfolgt vorzugsweise an Hand der Position eines von beispielsweise vier Eckpunkten des Fahrzeuges gegenüber den Hindernissen, beispielsweise jenes Eckpunktes, um das sich das Fahrzeug am engsten drehen muss, um die Endposition zu erreichen. Dieser Eckpunkt kann beispielsweise in der Initialisierungsphase des Algorithmus an Hand der gemessenen Sensordaten bestimmt werden. Die Bedingung für den Abschnittswechsel kann jedoch auch an Hand anderer Kriterien erfolgen, insbesondere in Bezug auf die Position eines Punktes des Fahrzeuges in Bezug auf ein abgeleitetes Kriterium der Hindernisse, beispielsweise einer ganz bestimmten Grenzlinie zwischen den Hindernissen.

Es kann auch ein bestimmter Sicherheitsabstand um die Hindernisse berechnet werden, um mit Sicherheit Kollisionen zu vermeiden und beispielsweise Messfehlern in Bezug auf die Position und Erstreckung der Hindernisse entgegenzuwirken.

Erfindungsgemäß kann vorgesehen sein, dass sich die unterschiedlichen Abschnitte durch jeweils unterschiedliche Gewichtungsfaktoren der Optimierungsvariablen $e_P$ und $e_\theta$ unterscheiden.

In einer Variante der Erfindung ist das Verfahren in zwei Phasen A und B unterteilt, wobei in Phase A die Gewichtung der aktuellen Distanz $e_P$ zur Endposition gegenüber der Gewichtung der aktuellen Winkeldifferenz $e_\theta$ zum Zielwinkel überwiegt, um das Fahrzeug schnell in Richtung der Endposition zu bewegen, in Phase B die Gewichtung der Winkeldifferenz $e_\theta$ zum Zielwinkel gegenüber der Gewichtung der aktuellen Distanz $e_P$ zur Endposition überwiegt, um das Fahrzeug in die richtige Winkelstellung zu bringen, wobei in einem Umschaltpunkt zwischen Phase A und Phase B umgeschaltet wird, sobald die Position eines Eckpunktes des Fahrzeugs eine Grenzlinie zwischen den Hindernissen durchtritt.

Es sind jedoch auch Situationen erfindungsgemäß vorgesehen, bei denen mehr als zwei Abschnitte mit unterschiedlichen Gewichtungsfaktoren vorliegen, beispielsweise wenn sich auch im Umfeld der Endposition zusätzliche Hindernisse befinden, die umfahren werden müssen. Die Anzahl der Abschnitte mit unterschiedlichen Gewichtungsfaktoren ist erfindungsgemäß nicht beschränkt.

Erfindungsgemäß kann vorgesehen sein, dass während des Verfahrens zusätzlich Richtungswechselpunkte bestimmt werden, in denen die Richtung des zu bestimmenden Teilpfads gewechselt wird. Dabei können die Richtungswechselpunkte definiert sein als jene Punkte, in denen entweder kein Teilpfad ermittelt werden kann, dessen zugehörige Kostenfunktion gegenüber dem vorher ermittelten Teilpfad verbessert ist, oder kein Teilpfad ermittelt werden kann, der innerhalb des erlaubten Schrittweitenbereichs liegt.

Insbesondere können die Richtungswechselpunkte definiert sein als jene Punkte, in denen in Phase A kein Teilpfad ermittelt werden kann, dessen zugehörige Kostenfunktion gegenüber dem vorher ermittelten Teilpfad verbessert ist, oder in Phase B kein Teilpfad ermittelt werden kann, der innerhalb des erlaubten Schrittweitenbereichs liegt.

Dadurch wird ein dem menschlichen Fahrzeuglenker ähnliches Fahrverhalten nachgeahmt, indem die aktuelle Fahrtrichtung umgekehrt wird, wenn in der aktuellen Richtung keine Verbesserung der Position oder keine weitere Bewegung ohne Kollision möglich ist.

Neben dem Verfahren erstreckt sich die vorliegende Erfindung auch auf einen computerlesbaren Datenträger mit einem Computerprogramm, das ein erfindungsgemäßes Verfahren implementiert, sowie auf eine Vorrichtung zur Durchführung eines erfindungsgemäßen Verfahrens, umfassend Sensoren zur Ermittlung der Startposition, der Endposition, des Fahrzeugwinkels, des Lenkwinkels und der Koordinaten der Hindernisse sowie eine Steuereinheit, sowie auf ein Fahrzeug mit einer derartigen Vorrichtung.

Weitere erfindungsgemäße Merkmale ergeben sich aus den Ansprüchen, der Beschreibung und den Zeichnungen. Nachfolgend wird die Erfindung an Hand von Ausführungsbeispielen näher erläutert.

Fig. 1 zeigt eine schematische Skizze des verwendeten kinematischen Modells für das Fahrzeug;
Fig. 2a-2b zeigen schematische Skizzen eines Ausparkvorgangs eines Fahrzeugs unter Ausführung des erfindungsgemäßen Verfahrens;
Fig. 3 zeigt eine schematische Darstellung verschiedener Parkszenarien;
Fig. 4 zeigt eine schematische Darstellung eines Parkszenarios;
Fig. 5 zeigt eine Darstellung des erfindungsgemäßen Verfahrens unter Verwendung von Pseudocode.

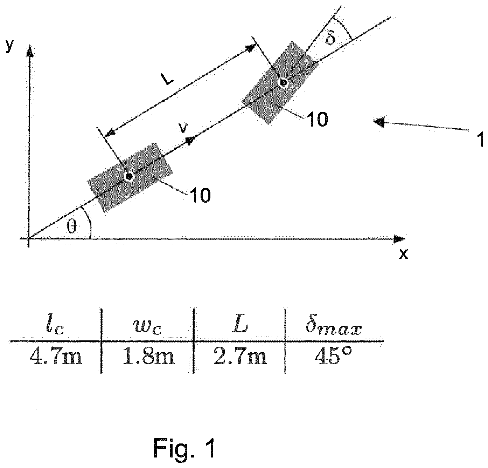

Fig. 1 zeigt eine schematische Skizze des verwendeten kinematischen Modells für das Fahrzeug. Das Fahrzeug 1 (nicht dargestellt) hat eine Länge $l_c$, und eine Breite $w_c$, beispielsweise entsprechend der dargestellten Tabelle, und bewegt sich in Richtung des Vektors v und hat dabei in Bezug auf das verwendete Koordinatensystem zunächst die Fahrzeugorientierung $\theta$. Beide Räder einer Achse sind hierbei zu je einem gedachten Rad 10 in der Mitte der Achse zusammengefasst, wobei das Vorderrad den Lenkwinkel $\delta$ aufweist. Der maximale Lenkwinkel beträgt in diesem Ausführungsbeispiel 45°. Der Abstand der beiden Räder ist der entsprechende Radstand des Fahrzeugs L.

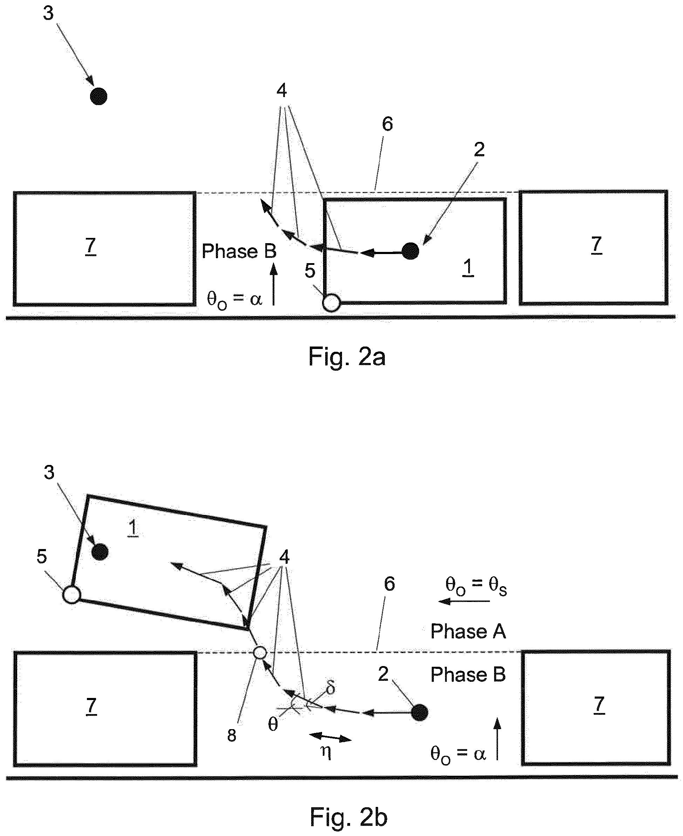

Fig. 2a zeigt ein Fahrzeug 1, das sich in einer Startposition 2 befindet und in eine Endposition 3 gelenkt werden soll, ohne die Hindernisse 7 zu berühren. Zu diesem Zweck wird eine Reihe von Teilpfaden 4 bestimmt, wobei für jeden Teilpfad ein statisches Optimierungsproblem gelöst wird.

Abhängig von der Position eines Eckpunktes 5 des Fahrzeugs relativ zu einer gedachten Grenzlinie 6 zwischen den Hindernissen 7 wird zwischen den Phasen A und B unterschieden, in denen unterschiedliche Gewichtungen für das jeweils zu lösende Optimierungsverfahren verwendet werden. Im dargestellten Fall befindet sich das Fahrzeug 1 im geparkten Zustand in Phase B und soll mit möglichst starken Drehbewegungen aus der Parklücke herausbewegt werden, ohne dass die absolute Distanz zum Endpunkt 3 von hoher Bedeutung ist. Aus diesem Grund wird im Optimierungsverfahren der Zielwinkel $\theta_O = \alpha$ gesetzt, und die Gewichtung der Distanz zur Endposition $e_P$ wird gegenüber der Gewichtung der Winkeldifferenz zum Zielwinkel $e_\theta = \theta - \theta_O$ stark reduziert.

Fig. 2b zeigt das Fahrzeug 1 kurz bevor es die Endposition 3 erreicht hat. Der Eckpunkt 5 hat im Umschaltpunkt 8 die Grenzlinie 6 durchquert, und es wurde von Phase B auf Phase A umgeschaltet. Entsprechend wurde im Optimierungsverfahren der Zielwinkel $\theta_O = \theta_S$ gesetzt, und die Gewichtung der Distanz zur Endposition $e_P$ gegenüber der Gewichtung der Winkeldifferenz zum Zielwinkel $e_\theta$ stark erhöht.

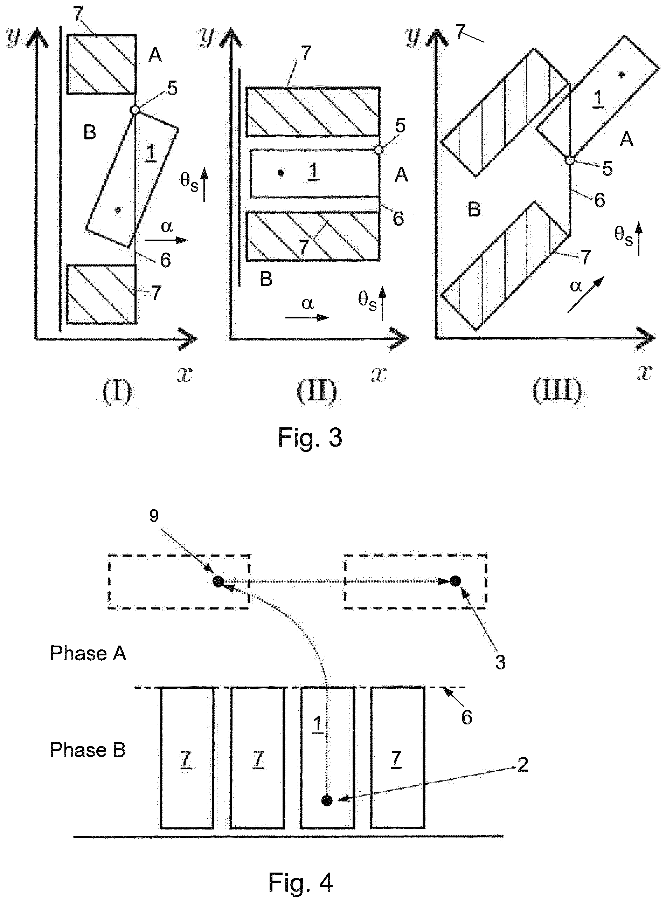

Fig. 3 zeigt schematisch verschiedene Szenarien des Verfahrens, nämlich paralleles Ein- und Ausparken bzw. Längsparken (I), Ein- und Ausparken in eine Garage bzw. Querparken (II) sowie schräges Ein- und Ausparken (III). In jedem Szenario ist ein möglicher relevanter Eckpunkt 5 des Fahrzeugs markiert, der zur Bestimmung des Phasenwechsels zwischen Phase A und Phase B herangezogen werden kann. Andere Eckpunkte sind ebenfalls denkbar.

Der Bereich der Phasen A und B ist ebenfalls dargestellt. In allen drei Szenarien weist der Zielwinkel $\theta_S$ in Phase A parallel zur Grenzlinie 6. Hingegen ist Zielwinkel $\alpha$ in Phase B in in Szenario I und II normal auf die Grenzlinie 6, jedoch in Szenario III parallel zur Längserstreckung der Hindernisse 7.

Fig. 4 zeigt eine schematische Darstellung eines Parkszenarios, bei dem die Fahrtrichtung gewechselt wird. Das Fahrzeug 1 bewegt sich, ausgehend vom Startpunkt 2, zunächst aus einer Parklücke heraus und bewegt sich somit aus der Phase B in die Phase A. Danach tritt jedoch eine Situation ein, in der sich das Fahrzeug durch jede Vorwärtsbewegung vom Endpunkt 3 weiter entfernt. Es kann demnach im Optimierungsverfahren in Phase A kein Teilpfad ermittelt werden, dessen Kostenfunktion geringer ist als die vorher berechnete Kostenfunktion.

Diese Situation wird im Richtungswechselpunkt 9 erkannt, bei dem das Fahrzug die Fahrtrichtung wechselt und rückwärts fährt. In Folge nähert sich das Fahrzeug dem Endpunkt 3 wieder an. Selbstverständlich kann es auch erforderlich sein, die Fahrtrichtung während eines Ein- oder Ausparkvorgangs mehrmals zu wechseln, um stets gültige und fortlaufend reduzierte Ergebnisse des Optimierungsverfahrens zu erhalten.

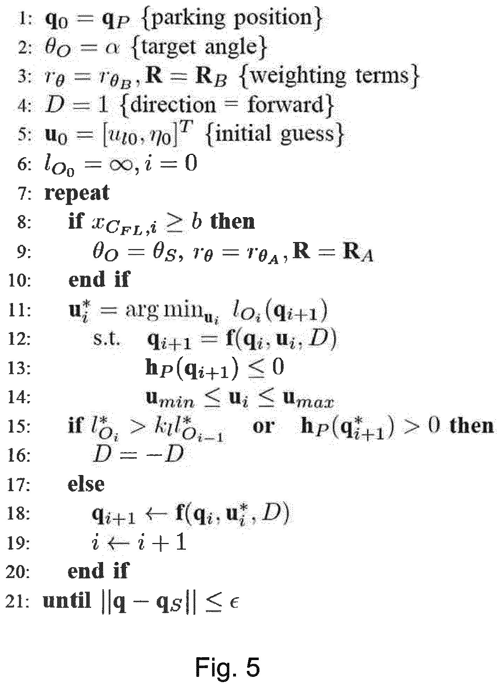

Fig. 5 zeigt eine detaillierte Darstellung des erfindungsgemäßen Verfahrens unter Verwendung von Pseudocode. In diesem Ausführungsbeispiel wird ein Ausparkverfahren durchgeführt, und die Startposition des Fahrzeugs $q_0$ wird als Parkposition $q_P$ initialisiert. Danach wird der Zielwinkel $\theta_O$ auf den Wert $\alpha$ gesetzt. Der Wert von $\alpha$ hängt von der jeweiligen Parksituation ab. Sowohl im Fall des Längsparkens, als auch im Fall des Querparkens soll das Fahrzeug für den Ausparkvorgang nach Möglichkeit normal auf die Grenzlinie 6 bewegt werden.

Danach werden der Gewichtsterm $r_\theta$ und die Gewichtsmatrix R gesetzt. Je nach Phase werden die Initialwerte $r_\theta$, $\theta_O$ und R beispielsweise wie folgt gesetzt, wobei selbstverständlich auch andere Gewichtungen vorgesehen sein können:

|  | Phase A | Phase B |
|---|---|---|
| $r_\theta$ | 4 | 1 |
| $\theta_O$ | $\theta_S$ | $\alpha$ |
| R | $\begin{pmatrix} 30 & 0 \\ 0 & 1 \end{pmatrix}$ | $\begin{pmatrix} 0.1 & 0 \\ 0 & 0 \end{pmatrix}$ |

Im vorliegenden Ausführungsbeispiel wird ein Ausparkvorgang bestimmt, somit befindet sich das Verfahren initial in Phase B. Die Richtung D des Fahrzeugs wird mit 1 (vorwärts) und der Startlösung $u = [u_{l0}, \eta_0]^T$ für den Lenkeingang $u_l = 1/L \tan(\delta)$ und der Schrittweite $\eta$ initialisiert. Die Vektoren $u_{min}$ und $u_{max}$ beschränken den Lenkeingang und die Schrittweite.

Danach wird in einer Schleife das Optimierungsverfahren so lange durchlaufen, bis sich die Position des Fahrzeugs in einer Epsilon-Umgebung um den Endpunkt befindet und somit die Endposition erreicht ist.

In jedem Schleifendurchlauf wird geprüft, ob die Position des Eckpunktes 5 die gedachte Grenzlinie der Hindernisse durchschreitet ($x_{CFI,i} \geq b$) und in diesem Fall werden die Gewichtungsterme der Phase A aus obiger Tabelle eingesetzt.

Danach wird das eigentliche Optimierungsverfahren gestartet, welches wie folgt definiert ist:

$$\min_{\mathbf{u}_i} \; l_{O_i}(\mathbf{q}_{i+1})$$

$$\text{s.t. } \mathbf{q}_{i+1} = \mathbf{f}(\mathbf{q}_i, \mathbf{u}_i, D)$$

$$\mathbf{h}_P(\mathbf{q}_{i+1}) \leq \mathbf{0}$$

$$\mathbf{u}_{min} \leq \mathbf{u}_i \leq \mathbf{u}_{max},$$

wobei die zu minimierende Kostenfunktion lautet:

$$l_{O_i}(\mathbf{q}_{i+1}) = r_\theta e_{\theta_{i+1}}^2 + \mathbf{e}_{P_{i+1}}^T \mathbf{R} \mathbf{e}_{P_{i+1}}.$$

In diesem Verfahren bezeichnet $q_i$ die aktuelle Position des Fahrzeugs zum Schritt i, $u_i$ den Schrittweitenvektor, und D die Richtung. Die Kostenfuktion wird minimiert in Hinblick auf die Variablen $e_{\theta i}$ und $e_{Pi}$. Der Term $e_{Pi} = [x_i-x_s, y_i-y_s]^T$ bezeichnet die Distanz des Fahrzeuges zum Schritt i zur Startposition $[x_s, y_s]$ (da der Gesamtpfad von der Endposition rückwärts zur Startposition berechnet wird). Der Term $e_{\theta i} = \theta_i - \theta_O$ bezeichnet die Differenz des aktuellen Fahrzeugwinkels zum Zielwinkel $\theta_O$. Die Parameter $r_\theta$ und R sind Gewichtungsparameter.

Die Funktion $h_P(q_i)$ bezeichnet eine Kollisionserkennung, welche eine Berührung der gegebenen Ausmaße des Fahrzeuges mit den Hindernissen auf geometrischem Weg erkennt. Schließlich bezeichnen $u_{min}$ und $u_{max}$ die minimalen und maximalen Werte der Optimierungsvariablen bestehend aus Lenkeingang und Schrittweite.

In jedem Iterationsschritt wird die Position und der Fahrzeugwinkel in Hinblick auf die Kostenfunktion verbessert, wobei die Kostenfunktion den Zweck erfüllt, durch Wahl definierter Gewichtungsparameter $r_\theta$ und R in den Phasen A und B eine schnelle Erreichung des Startpunkts zu ermöglichen.

Die neue Position $q_{i+1}$ wird durch eine Bewegungsgleichung f($q_i$, $u_i$, D) dargestellt, welche lautet

$$\mathbf{q}_{i+1} = \begin{pmatrix} x_{i+1} \\ y_{i+1} \\ \theta_{i+1} \end{pmatrix} = \begin{pmatrix} x_i + D\eta_i \cos\left(\theta_i + D\frac{\eta_i u_{l_i}}{2}\right) \\ y_i + D\eta_i \sin\left(\theta_i + D\frac{\eta_i u_{l_i}}{2}\right) \\ \theta_i + D\eta_i u_{l_i} \end{pmatrix}$$
$$= \mathbf{f}(\mathbf{q}_i, \mathbf{u}_i, D),$$

Das Optimierungsproblem der Kostenfunktion $l_{Oi}(q_i$ wird stets nur für einen inkrementellen Schritt nach dem anderen formuliert, und so lange wiederholt, bis der Endpunkt erreicht ist. Nach jeder Optimierung wird überprüft, ob entweder der Wert der Kostenfunktion größer ist als in der vorhergehenden Optimierung ($l_{Oi}^* > k_l \cdot l_{Oi}$-1$^*$) oder eine Kollision erfolgt ($h_P(q_{i+1}^*) > 0$) und somit kein Teilpfad gefunden wurde. Hier bezeichnet $k_l$ einen Gewichtungsfaktor, um auch hinreichend kleine Verschlechterungen zuzulassen. Ist dies der Fall, wird die Richtung des Teilpfades umgekehrt, indem D gleich -D gesetzt wird.

Anderenfalls wird die neue Position $q_{i+1}$ durch die Bewegungsgleichung f($q_i$, $u_i$, D) ermittelt, und das Verfahren mit der neuen Position fortgesetzt. Das Verfahren wird beendet, wenn sich die neue Position in einer Epsilon-Umgebung um den Endpunkt befindet.

Das erfindungsgemäße Verfahren kann Teil einer Steuerungselektronik eines Fahrzeugs sein, oder in Form eines Computerprogramms auf einem Datenträger vorliegen. Das entsprechend gesteuerte Fahrzeug ist mit Sensoren zur Erfassung der Umgebung und vorzugsweise auch der eigenen Fahrbewegungen ausgerüstet. So kann ein GPS-Sensor und mehrere Ultraschallsensoren oder Kameras vorgesehen sein, um die eigene Position und die Positionen der Hindernisse zu detektieren. Davon ausgehend können die benötigten Gewichtungsterme für das Verfahren bestimmt werden.

Die Erfindung beschränkt sich nicht auf die dargestellten Ausführungsbeispiele sondern erstreckt sich auf sämtliche Ausführungen im Rahmen der nachfolgenden Patentansprüche.

Bezugszeichenliste

1    Fahrzeug
2    Startposition
3    Endposition
4    Teilpfad
5    Eckpunkt
6    Grenzlinie
7    Hindernis
8    Umschaltpunkt
9    Richtungswechselpunkt
10   Rad

**Patentansprüche**

**1.** Verfahren zur Steuerung eines Fahrzeugs (1) um Hindernisse (7), ausgehend von einer Startposition (2) in eine Endposition (3), wobei das Fahrzeug entlang eines Pfades gesteuert wird, wobei der Pfad lineare Teilpfade (4) umfasst, die definiert sind durch eine Schrittweite η und einen Lenkwinkel δ, **dadurch gekennzeichnet, dass** das Verfahren folgende Schritte umfasst:

a) Bestimmung eines maximalen Lenkwinkelbereichs sowie eines maximalen und minimalen Schrittweitenbereichs;

b) Bestimmung der aktuellen Distanz $e_P$ zur Endposition (3) und eines Zielwinkels $\theta_O$ sowie der Winkeldifferenz $e_\theta$ des aktuellen Fahrzeugwinkels $\theta$ zum Zielwinkel;

c) Durchführung eines Optimierungsverfahrens zur Ermittlung eines Teilpfads (4) durch Minimierung des Werts einer dem Teilpfad zugeordneten Kostenfunktion $I_O$, wobei

(i) die Kostenfunktion die aktuelle Distanz $e_P$ zur Endposition (3) und die aktuelle Winkeldifferenz $e_\theta$ zum Zielwinkel als voneinander unabhängig gewichtete Optimierungsvariablen umfasst und

(ii) als Randbedingungen der maximale Lenkwinkelbereich, der maximale und minimale Schrittweitenbereich sowie eine Kollisionsprüfung vorgesehen sind;

d) Bestimmung der neuen Position durch Hinzufügen des ermittelten Teilpfades (4) zur aktuellen Position;

e) Wiederholung der Schritte (b) bis (d) bis die Endposition (3) mit hinreichender Genauigkeit erreicht wird.

2. Verfahren nach Anspruch 1, **dadurch gekennzeichnet, dass** zunächst der vollständige Pfad zum Endpunkt (3) berechnet wird, und danach das Fahrzeug entlang des Pfades gesteuert wird.

3. Verfahren nach Anspruch 1, **dadurch gekennzeichnet, dass** das Fahrzeug während der Berechnung des Pfades zum Endpunkt (3) entlang der berechneten Teilpfade (4) gesteuert wird.

4. Verfahren nach einem der Ansprüche 1 bis 3, **dadurch gekennzeichnet, dass** abhängig von der Position eines Punktes des Fahrzeugs (1), insbesondere eines Eckpunktes (5), relativ zu den Hindernissen (7) das Verfahren in zumindest zwei Abschnitte unterteilt wird, wobei in einem ersten Abschnitt ein Zielwinkel $\theta_O = \alpha$ gewählt wird, der im Wesentlichen normal auf eine Grenzlinie (6) zwischen den Hindernissen (7) ist.

5. Verfahren nach einem der Ansprüche 1 bis 3, **dadurch gekennzeichnet, dass** abhängig von der Position eines Punktes des Fahrzeugs (1), insbesondere eines Eckpunktes (5), relativ zu den Hindernissen (7) das Verfahren in zumindest zwei Abschnitte unterteilt wird, wobei in einem ersten Abschnitt ein Zielwinkel $\theta_O = \alpha$ gewählt wird, der im Wesentlichen parallel zur Längserstreckung der Hindernisse (7) ist.

6. Verfahren nach einem der Ansprüche 1 bis 5, **dadurch gekennzeichnet, dass** abhängig von der Position eines Punktes des Fahrzeugs (1), insbesondere eines Eckpunktes (5), relativ zu den Hindernissen (7) das Verfahren in zumindest zwei Abschnitte unterteilt wird, wobei in einem zweiten Abschnitt ein Zielwinkel $\theta_O = \theta_S$ gewählt wird, der im Wesentlichen parallel zu einer Grenzlinie (6) zwischen den Hindernissen (7) gewählt wird.

7. Verfahren nach einem der Ansprüche 4 bis 6, **dadurch gekennzeichnet, dass** sich die unterschiedlichen Abschnitte durch die Gewichtungsfaktoren der Optimierungsvariablen unterscheiden.

8. Verfahren nach Anspruch 7, **dadurch gekennzeichnet, dass** das Verfahren in zwei Phasen A und B unterteilt wird, wobei

a) in Phase A die Gewichtung der aktuellen Distanz $e_P$ zur Endposition (3) gegenüber der Gewichtung der Winkeldifferenz $e_\theta$ zum Zielwinkel überwiegt, um das Fahrzeug schnell in Richtung der Endposition zu bewegen,

b) in Phase B die Gewichtung der Winkeldifferenz $e_\theta$ zum Zielwinkel gegenüber der Gewichtung der Distanz $e_P$ zur Endposition überwiegt, um das Fahrzeug in die richtige Winkelstellung zu bringen,

c) in einem Umschaltpunkt (8) zwischen Phase A und Phase B umgeschaltet wird, sobald die Position eines Punktes des Fahrzeugs (1), insbesondere eines Eckpunktes (5), eine Grenzlinie (6) zwischen den Hindernissen (7) durchtritt.

9. Verfahren nach einem der Ansprüche 1 bis 7, **dadurch gekennzeichnet, dass** während des Optimierungsverfahrens Richtungswechselpunkte (9) bestimmt werden, in denen die Richtung des zu bestimmenden Teilpfads gewechselt wird, wobei die Richtungswechselpunkte definiert sind als jene Punkte, in denen

a) kein Teilpfad ermittelt werden kann, dessen zugehörige Kostenfunktion gegenüber dem vorher ermittelten Teilpfad verbessert ist, oder

b) kein Teilpfad ermittelt werden kann, dessen Schrittweite innerhalb des erlaubten Schrittweitenbereichs liegt.

**10.** Verfahren nach Anspruch 8, **dadurch gekennzeichnet, dass** während des Optimierungsverfahrens Richtungswechselpunkte (9) bestimmt werden, in denen die Richtung des zu bestimmenden Teilpfads gewechselt wird, wobei die Richtungswechselpunkte definiert sind als jene Punkte, in denen

> a) in Phase A kein Teilpfad ermittelt werden kann, dessen zugehörige Kostenfunktion gegenüber dem vorher ermittelten Teilpfad verbessert ist, oder
> b) in Phase B kein Teilpfad ermittelt werden kann, der innerhalb des erlaubten Schrittweitenbereichs liegt.

**11.** Datenträger mit einem Computerprogramm, das ein Verfahren gemäß einem der Ansprüche 1 bis 10 implementiert.

**12.** Vorrichtung zur Durchführung eines Verfahrens nach einem der Ansprüche 1 bis 10, umfassend Sensoren zur Ermittlung der Startposition (2), der Endposition (3), des Lenkwinkels $\delta$, des Fahrzeugwinkels $\theta$ und der Koordinaten der Hindernisse (7) sowie eine Steuereinheit.

**13.** Fahrzeug mit einer Vorrichtung gemäß Anspruch 12.


**Claims**

**1.** Method for controlling a vehicle (1) around obstacles (7), starting from a starting position (2) into an end position (3), the vehicle being controlled along a path, the path comprising linear path parts (4) which are defined by a step size $\eta$ and a steering angle $\delta$, **characterized in that** the method comprises the following steps of:

> a) determining a maximum steering angle range and a maximum and a minimum step size range;
> b) determining the current distance $e_P$ to the end position (3) and a target angle $\theta_O$ as well as the angle difference $e_\theta$ between the current vehicle angle $\theta$ and the target angle;
> c) carrying out an optimization method in order to determine a path part (4) by minimizing the value of a cost function $I_O$ assigned to the path part,
>
> > (i) the cost function comprising the current distance $e_P$ to the end position (3) and the current angle difference ee with respect to the target angle as optimization variables which are weighted independently of one another, and
> > (ii) the maximum steering angle range, the maximum and minimum step size ranges and a collision check being provided as boundary conditions;
>
> (d) determining the new position by adding the determined path part (4) to the current position;
> (e) repeating steps (b) to (d) until the end position (3) is reached with sufficient accuracy.

**2.** Method according to Claim 1, **characterized in that** the complete path to the end point (3) is first of all calculated and the vehicle is then controlled along the path.

**3.** Method according to Claim 1, **characterized in that** the vehicle is controlled along the calculated path parts (4) during the calculation of the path to the end point (3).

**4.** Method according to one of Claims 1 to 3, **characterized in that**, depending on the position of a point of the vehicle (1), in particular a corner point (5), relative to the obstacles (7), the method is subdivided into at least two sections, a target angle $\theta_O = \alpha$ which is substantially normal to a boundary line (6) between the obstacles (7) being selected in a first section.

**5.** Method according to one of Claims 1 to 3, **characterized in that**, depending on the position of a point of the vehicle (1), in particular a corner point (5), relative to the obstacles (7), the method is subdivided into at least two sections, a target angle $\theta_O = \alpha$ which is substantially parallel to the longitudinal extent of the obstacles (7) being selected in a first section.

**6.** Method according to one of Claims 1 to 5, **characterized in that**, depending on the position of a point of the vehicle (1), in particular a corner point (5), relative to the obstacles (7), the method is subdivided into at least two sections, a target angle $\theta_O = G_S$ which is selected to be substantially parallel to a boundary line (6) between the obstacles (7) being selected in a second section.

7. Method according to one of Claims 4 to 6, **characterized in that** the different sections differ in terms of the weighting factors of the optimization variables.

8. Method according to Claim 7, **characterized in that** the method is subdivided into two phases A and B,

   a) the weighting of the current distance $e_P$ to the end position (3) outweighing the weighting of the angle difference ee with respect to the target angle in phase A in order to quickly move the vehicle in the direction of the end position,
   b) the weighting of the angle difference ee with respect to the target angle outweighing the weighting of the distance $e_P$ to the end position in phase B in order to change the vehicle to the correct angular position,
   c) a changeover being made between phase A and phase B at a changeover point (8) as soon as the position of a point of the vehicle (1), in particular a corner point (5), crosses a boundary line (6) between the obstacles (7).

9. Method according to one of Claims 1 to 7, **characterized in that** direction change points (9) at which the direction of the path part to be determined is changed are determined during the optimization method, the direction change points being defined as those points at which

   a) it is not possible to determine a path part whose associated cost function is improved in comparison with the previously determined path part, or
   b) it is not possible to determine a path part whose step size is within the permitted step size range.

10. Method according to Claim 8, **characterized in that** direction change points (9) at which the direction of the path part to be determined is changed are determined during the optimization method, the direction change points being defined as those points at which

    a) it is not possible to determine a path part whose associated cost function is improved in comparison with the previously determined path part in phase A, or
    b) it is not possible to determine a path part which is within the permitted step size range in phase B.

11. Data storage medium having a computer program which implements a method according to one of Claims 1 to 10.

12. Apparatus for carrying out a method according to one of Claims 1 to 10, comprising sensors for determining the starting position (2), the end position (3), the steering angle $\delta$, the vehicle angle $\theta$ and the coordinates of the obstacles (7) and a control unit.

13. Vehicle having an apparatus according to Claim 12.

**Revendications**

1. Procédé pour commander un véhicule (1) afin de contourner des obstacles (7), d'une position de départ (2) à une position finale (3), dans lequel le véhicule est dirigé le long d'un trajet, dans lequel le trajet comprend des trajets partiels linéaires (4), qui sont définis par un pas $\eta$ et un angle de braquages $\delta$, **caractérisé en ce que** le procédé comprend les étapes consistant à :

   a) déterminer une plage d'angles de braquage maximale et des plages de pas maximale et minimale;
   b) déterminer la distance actuelle $e_P$ par rapport à la position finale (3) et un angle cible $\theta_O$ ainsi que la différence angulaire $e_\theta$ de l'angle actuel du véhicule $\theta$ par rapport à l'angle cible ;
   c) effectuer un processus d'optimisation pour déterminer un trajet partiel (4) par minimisation de la valeur d'une fonction de coût $I_O$ associée au trajet partiel, dans lequel

      (i) la fonction de coût comprend la distance actuelle $e_P$ par rapport à la position finale (3) et la différence angulaire actuelle $e_\theta$ par rapport à l'angle cible en tant que variables d'optimisation pondérées indépendamment l'une de l'autre et
      (ii) les plages de pas maximale et minimale ainsi qu'un contrôle de collision sont prévus en tant que conditions aux limites de la plage d'angles de braquage maximale ;

   d) déterminer la nouvelle position en ajoutant le trajet partiel déterminé (4) à la position actuelle ;

e) répéter les étapes (b) à (d) jusqu'à ce que la position finale (3) soit atteinte avec une précision suffisante.

2. Procédé selon la revendication 1, **caractérisé en ce qu'**en premier lieu la totalité du trajet est calculée par rapport au point final (3), et **en ce que** le véhicule est ensuite dirigé le long du trajet.

3. Procédé selon la revendication 1, **caractérisé en ce que** le véhicule est dirigé pendant le calcul du trajet vers le point final (3) le long des trajets partiels calculés (4).

4. Procédé selon l'une quelconque des revendications 1 à 3, **caractérisé en ce que** le procédé est divisé en au moins deux parties en fonction de la position d'un point du véhicule (1), notamment d'un point d'angle (5), par rapport aux obstacles (7), dans lequel, dans une première partie, un angle cible $\theta_O = \alpha$ est sélectionné, celui-ci étant sensiblement perpendiculaire à une ligne limite (6) entre les obstacles (7).

5. Procédé selon l'une quelconque des revendications 1 à 3, **caractérisé en ce que** le procédé est divisé en au moins deux parties en fonction de la position d'un point du véhicule (1), notamment d'un point d'angle (5), par rapport aux obstacles (7), dans lequel, dans une première partie, un angle cible $\theta_O = \alpha$ est sélectionné, celui-ci étant sensiblement parallèle à l'extension longitudinale des obstacles (7) est sélectionné.

6. Procédé selon l'une quelconque des revendications 1 à 5, **caractérisé en ce que** le procédé est divisé en au moins deux parties en fonction de la position d'un point du véhicule (1), notamment d'un point d'angle (5), par rapport aux obstacles (7), dans lequel, dans une deuxième partie, un angle cible $\theta_O = \theta_S$ est sélectionné, celui-ci étant sélectionné de manière à être sensiblement parallèle à une ligne limite (6) entre les obstacles (7).

7. Procédé selon l'une quelconque des revendications 4 à 6, **caractérisé en ce que** les différentes parties se différencient par les facteurs de pondération des variables d'optimisation.

8. Procédé selon la revendication 7, **caractérisé en ce que** le procédé est divisé en deux phases A et B, dans lequel

   a) lors de la phase A, la pondération de la distance actuelle $e_P$ de la position finale (3) est prédominante par rapport à la pondération de la différence angulaire $e_\theta$ relativement à l'angle cible afin que le véhicule se déplace rapidement dans la direction de la position finale,
   b) lors de la phase B, la pondération de la différence angulaire $e_\theta$ avec à l'angle cible est prédominante par rapport à la distance $e_P$ de la position finale afin d'amener le véhicule à la position angulaire voulue,
   c) un basculement entre la phase A et la phase B est effectué en un point de basculement (8) dès que la position d'un point du véhicule (1), notamment d'un point d'angle (5), franchit une ligne limite (6) entre les obstacles (7).

9. Procédé selon l'une quelconque des revendications 1 à 7, **caractérisé en ce que**, pendant le processus d'optimisation, des points de changement de direction (9) sont déterminés, à l'emplacement desquels la direction du trajet partiel à déterminer est modifiée, dans lequel les points de changement de direction sont définis comme étant les points où

   a) il est impossible de déterminer un trajet partiel dont la fonction de coût associée est améliorée par rapport au trajet partiel précédemment déterminé, ou
   b) il est impossible de déterminer un trajet partiel dont le pas se situe à l'intérieur de la plage de pas autorisée.

10. Procédé selon la revendication 8, **caractérisé en ce que**, pendant le processus d'optimisation, des points de changement de direction (9) sont déterminés, à l'emplacement desquels la direction du trajet partiel à déterminer est modifiée, dans lequel les points de changement de direction sont définis comme étant les points où

    a) il est impossible de déterminer un trajet partiel lors de la phase A dont la fonction de coût associée est améliorée par rapport au trajet partiel précédemment déterminé, ou
    b) il est impossible de déterminer un trajet partiel lors de la phase B, qui se situe à l'intérieur de la plage de pas autorisée.

11. Support de données comportant un programme d'ordinateur qui met en oeuvre un procédé selon l'une quelconque des revendications 1 à 10.

12. Dispositif destiné à mettre en oeuvre un procédé selon l'une quelconque des revendications 1 à 10, comprenant des capteurs destinés à déterminer la position de départ (2), la position finale (3), l'angle de braquage δ, l'ange de véhicule θ et les coordonnées des obstacles (7) ainsi qu'une unité de commande.

13. Véhicule comportant un dispositif selon la revendication 12.

| $l_c$ | $w_c$ | $L$ | $\delta_{max}$ |
|-------|-------|-----|----------------|
| 4.7m | 1.8m | 2.7m | 45° |

Fig. 1

Fig. 2a

Fig. 2b

Fig. 3

Fig. 4

1: $\mathbf{q}_0 = \mathbf{q}_P$ {parking position}
2: $\theta_O = \alpha$ {target angle}
3: $r_\theta = r_{\theta_B}, \mathbf{R} = \mathbf{R}_B$ {weighting terms}
4: $D = 1$ {direction = forward}
5: $\mathbf{u}_0 = [u_{l0}, \eta_0]^T$ {initial guess}
6: $l_{O_0} = \infty, i = 0$
7: **repeat**
8:    **if** $x_{C_{FL},i} \geq b$ **then**
9:       $\theta_O = \theta_S, r_\theta = r_{\theta_A}, \mathbf{R} = \mathbf{R}_A$
10:    **end if**
11:    $\mathbf{u}_i^* = \arg\min_{\mathbf{u}_i} l_{O_i}(\mathbf{q}_{i+1})$
12:      s.t.   $\mathbf{q}_{i+1} = \mathbf{f}(\mathbf{q}_i, \mathbf{u}_i, D)$
13:         $\mathbf{h}_P(\mathbf{q}_{i+1}) \leq 0$
14:         $\mathbf{u}_{min} \leq \mathbf{u}_i \leq \mathbf{u}_{max}$
15:    **if** $l_{O_i}^* > k_l l_{O_{i-1}}^*$   **or**   $\mathbf{h}_P(\mathbf{q}_{i+1}^*) > 0$ **then**
16:      $D = -D$
17:    **else**
18:      $\mathbf{q}_{i+1} \leftarrow \mathbf{f}(\mathbf{q}_i, \mathbf{u}_i^*, D)$
19:      $i \leftarrow i + 1$
20:    **end if**
21: **until** $\|\mathbf{q} - \mathbf{q}_S\| \leq \epsilon$

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012211721 A1
- US 2012101654 A1